# FASCICULE DE BREVET EUROPEEN

(11) **EP 4 197 316 B1**
(45) Date de publication et mention de la délivrance du brevet: **30.10.2024**
(21) Numéro de dépôt: 22213245.8
(22) Date de dépôt: 13.12.2022
(51) Int. Cl.: A01G 25/16, A01G 27/00, F16K 31/00, F16K 31/385

(54) **DISPOSITIF D'ARROSAGE AUTONOME**
AUTONOME BEWÄSSERUNGSVORRICHTUNG
SELF-CONTAINED WATERING DEVICE

(30) Priorité: 14.12.2021 FR 2113498
(43) Date de publication de la demande: 21.06.2023
(73) Titulaire: Irrigio, 13770 Venelles (FR)
(72) Inventeur: BEGNIS, Camille Évariste Raymond, 13640 LA ROQUE D'ANTHERON (FR)
(74) Mandataire: Lavoix

(56) Documents cités:
- EP-A1- 3 784 933
- US-A- 5 941 501
- US-A1- 2020 326 008

## Description

La présente invention concerne un dispositif d'arrosage autonome.

Dans le domaine de l'arrosage agricole, il est connu de contrôler l'arrosage d'une parcelle agricole de manière autonome, en fonction de l'humidité du sol.

Il ainsi est connu de US-A-2020 0326008 de proposer un dispositif d'arrosage autonome muni d'une vanne comprenant un conduit d'arrivée d'eau et un conduit de sortie d'eau, reliés par l'intermédiaire d'une chambre de commande, et une membrane, disposée dans la chambre de commande et mobile entre une position ouverte et une position fermée, de sorte à respectivement autoriser, ou interrompre, une circulation d'eau depuis la chambre de commande jusqu'au conduit de sortie d'eau. La vanne comprend également un conduit de dérivation, qui relie la chambre de commande au conduit de sortie d'eau. Lorsqu'une circulation d'eau est possible dans le conduit de dérivation, alors la membrane est en position ouverte. À l'inverse, lorsqu'une circulation d'eau dans le conduit de dérivation est obstruée, alors la membrane est en position fermée. Ce dispositif d'arrosage autonome comprend un capteur d'humidité du sol, qui contient un matériau hygroscopique se gonflant lorsque le taux d'humidité du sol augmente, de sorte à obstruer de manière progressive le conduit de dérivation, et se rétractant lorsque le taux d'humidité du sol diminue, de sorte à ouvrir de manière progressive le conduit de circulation d'eau. Ainsi, le débit d'eau traversant le conduit de dérivation est variable en fonction du taux d'humidité du sol, et lorsque ce débit est inférieur à un débit minimal, alors la membrane bascule en position fermée.

Cependant, un tel dispositif d'arrosage ne permet pas de contrôler avec précision l'arrosage de la zone à irriguer. En particulier, ce dispositif d'arrosage ne permet pas de différentier le taux d'humidité du sol entraînant une ouverture de la vanne du taux d'humidité du sol entraînant une fermeture de la vanne.

C'est à ces inconvénients qu'entend plus particulièrement remédier l'invention en proposant un dispositif d'arrosage autonome permettant d'irriguer une parcelle agricole avec plus de précision.

À cet effet, l'invention concerne un dispositif d'arrosage autonome comprenant :
- une vanne, commutable entre une configuration ouverte et une configuration fermée, présentant un conduit d'arrivée d'eau, un conduit de sortie d'eau, une chambre de commande par l'intermédiaire de laquelle les conduits d'arrivée d'eau et de sortie d'eau sont reliés et une première membrane, disposée dans la chambre de commande et mobile entre une position de fermeture, lorsque la vanne est en configuration fermée, dans laquelle une circulation d'eau au travers de la vanne est empêchée, et une position d'ouverture, lorsque la vanne est en configuration ouverte, dans laquelle une circulation d'eau au travers de la vanne n'est pas empêchée ;
- un régulateur, comprenant un organe de basculement actionnable de sorte à entraîner le basculement de la vanne entre ses configurations ouverte et fermée en entraînant le déplacement de la première membrane entre ses positions d'ouverture et de fermeture ; et
- un capteur d'humidité, configuré pour être disposé dans un sol et pour actionner le régulateur en fonction d'un taux d'humidité du sol.

Selon l'invention :
- le régulateur comprend un actionneur d'ouverture, qui comporte une tête d'ouverture configurée pour actionner l'organe de basculement de sorte à entraîner le déplacement de la première membrane depuis sa position de fermeture vers sa position d'ouverture lorsqu'un taux d'humidité du sol, mesuré par le capteur d'humidité, atteint un taux d'humidité minimal,
- le régulateur comprend un actionneur de fermeture, qui comporte une tête de fermeture configurée pour actionner l'organe de basculement de sorte à entraîner le déplacement de la première membrane depuis sa position d'ouverture vers sa position de fermeture lorsqu'un taux d'humidité du sol, mesuré par le capteur d'humidité, atteint un taux d'humidité maximal, et
- l'actionneur d'ouverture et l'actionneur de fermeture sont distincts l'un de l'autre.

Grâce à l'invention, le régulateur comprend deux actionneurs distincts contrôlant l'ouverture et la fermeture de la vanne, permettant ainsi de distinguer un taux d'humidité du sol entraînant une ouverture de la vanne d'un taux d'humidité du sol entraînant une fermeture de la vanne.

Selon des aspects avantageux, mais non obligatoires de l'invention, le dispositif d'arrosage autonome incorpore une ou plusieurs des caractéristiques suivantes, prises isolément ou selon toutes combinaisons techniquement admissibles :
- Le capteur d'humidité comprend une quantité de matériau hygroscopique dont un volume varie en fonction du taux d'humidité du sol, le régulateur comprend un piston, mobile en étant entraîné par le matériau, et les têtes d'ouverture et de fermeture sont entraînées par le piston.
- L'actionneur d'ouverture comprend un dispositif de réglage configuré pour régler un taux d'humidité minimal détecté par le capteur d'humidité et entraînant le déplacement de la première membrane depuis sa position de fermeture vers sa position d'ouverture, et l'actionneur de fermeture comprend un dispositif de réglage configuré pour régler un taux d'humidité maximal détecté par le capteur d'humidité et entraînant le déplacement de la première membrane depuis sa position d'ouverture vers sa position de fermeture.

- Le dispositif de réglage de l'actionneur d'ouverture et le dispositif de réglage de l'actionneur de fermeture sont accessibles depuis l'extérieur d'un corps du dispositif d'arrosage autonome.
- La tête d'ouverture et la tête de fermeture sont vissées sur le piston, le dispositif de réglage de l'actionneur d'ouverture est configuré pour visser ou dévisser la tête d'ouverture par rapport au piston, de sorte à régler une distance entre une extrémité de la tête d'ouverture et le piston, et le dispositif de réglage de l'actionneur de fermeture est configuré pour visser ou dévisser la tête de fermeture par rapport au piston, de sorte à régler une distance entre une extrémité de la tête de fermeture et le piston.
- L'organe de basculement est bistable.
- L'organe de basculement est une lame bistable, une première tête parmi la tête d'ouverture et la tête de fermeture est configurée pour tirer sur la lame bistable de sorte à entraîner le basculement de la vanne entre ses configurations ouverte et fermée, et une deuxième tête parmi la tête d'ouverture et la tête de fermeture est configurée pour pousser sur la lame bistable de sorte à entraîner le basculement de la vanne entre ses configurations fermée et ouverte.
- La vanne comprend un conduit de dérivation, qui relie la chambre de commande au conduit de sortie d'eau. Lorsqu'une circulation d'eau au travers du conduit de dérivation est autorisée, alors la vanne est en configuration ouverte et lorsque la circulation d'eau au travers du conduit de dérivation est interrompue, alors la vanne est en configuration fermée. L'organe de basculement est configuré pour sélectivement autoriser ou interrompre la circulation d'eau au travers du conduit de dérivation.
- Le régulateur comprend une deuxième membrane, disposée dans le conduit de dérivation, mobile entre une position d'ouverture, dans laquelle la deuxième membrane ne s'oppose pas à la circulation d'eau au travers du conduit de dérivation, et une position de fermeture, dans laquelle la deuxième membrane s'oppose à la circulation d'eau au travers du conduit de dérivation, et le basculement de l'organe de basculement entraîne le déplacement de la deuxième membrane entre ses positions d'ouverture et de fermeture.
- Le régulateur comprend un poussoir, monté entre l'organe de basculement et la deuxième membrane, et fixé d'une part à l'organe de basculement, et d'autre part à la deuxième membrane.

L'invention sera mieux comprise et d'autres avantages de celle-ci apparaîtront plus clairement à la lumière de la description qui va suivre de deux modes de réalisation d'un dispositif d'arrosage autonome, conformes à son principe, donnée uniquement à titre d'exemple et faite en référence aux dessins annexés dans lesquels :
[Fig. 1] La figure 1 est une vue de côté d'un dispositif d'arrosage autonome conforme à un premier mode de réalisation de l'invention ;
[Fig. 2] La figure 2 est une coupe longitudinale partielle du dispositif d'arrosage autonome de la figure 1, le dispositif étant montré dans une configuration avant fermeture ;
[Fig. 3] La figure 3 est une coupe analogue à la figure 2, le dispositif étant montré dans une configuration après fermeture ;
[Fig. 4] La figure 4 est une coupe analogue aux figures 2 et 3, le dispositif étant montré dans une configuration avant ouverture ;
[Fig. 5] La figure 5 est une coupe analogue aux figures 2 à 4, le dispositif étant montré dans une configuration après ouverture ; et
[Fig. 6] La figure 6 est une coupe longitudinale d'un dispositif d'arrosage autonome conforme à un deuxième mode de réalisation de l'invention.

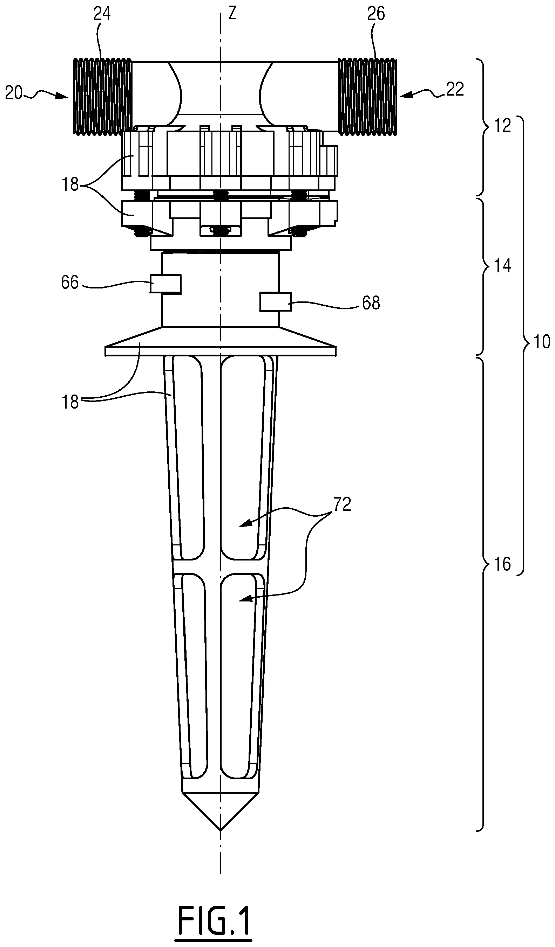

Un dispositif d'arrosage autonome 10 est représenté aux figures 1 à 5. Le dispositif d'arrosage autonome 10 est prévu pour être raccordé à une installation d'arrosage, en étant disposé dans le sol d'une zone à irriguer, par exemple au sein d'une parcelle agricole ou d'un jardin. En pratique, le dispositif 10 est prévu pour être disposé entre une source d'eau non-représentée et des moyens d'irrigation non-représentés, tels que par exemple un arroseur oscillant, un asperseur, ou encore un tuyau d'arrosage.

Le dispositif d'arrosage autonome 10 comprend une vanne 12, un régulateur 14 et un capteur d'humidité 16, prévu pour mesurer un taux d'humidité du sol dans lequel le dispositif d'arrosage autonome est disposé.

Dans l'exemple, le dispositif d'arrosage autonome 10 est d'un seul tenant, c'est-à-dire que la vanne 12, le régulateur 14 et le capteur d'humidité 16 sont assemblés entre eux de sorte à former un ensemble rigide. Ainsi, le dispositif d'arrosage autonome 10 présente un corps 18, dans lequel sont formés la vanne, le régulateur et le capteur d'humidité. Dans l'exemple, le corps 18 est formé de plusieurs éléments assemblés entre eux.

La vanne 12 comprend un conduit d'arrivée d'eau 20 et un conduit de sortie d'eau 22, qui sont respectivement prévus pour être raccordés à la source d'eau, et aux moyens d'irrigation par des tuyaux non représentés, et qui sont ménagés dans le corps 18.

De préférence, les conduits d'arrivée d'eau 20 et de sortie d'eau 22 comprennent chacun un filetage, notés respectivement 24 et 26, qui permettent le raccordement des conduits 20 et 22 à la source d'eau et aux moyens d'irrigation par vissage des extrémités des tuyaux.

La vanne 12 comprend une chambre de commande 28, formée dans le corps 18, par l'intermédiaire de laquelle le conduit d'arrivée d'eau 20 est relié au conduit de sortie d'eau 22. En d'autres termes, la chambre de commande 28 est en communication fluidique d'une part avec le conduit d'arrivée d'eau 20 et d'autre part avec le conduit de sortie d'eau 22. En pratique, une extrémité aval 30 du conduit d'arrivée d'eau 20 débouche dans la chambre de commande 28, et une extrémité amont 32 du conduit de sortie d'eau 22 débouche dans la chambre de commande. Ainsi, une circulation d'eau au travers de la vanne 12, notée C1, passe par l'extrémité aval 30 du conduit d'arrivée d'eau 20, par la chambre de commande 28, puis par l'extrémité amont 32 du conduit de sortie d'eau 22.

Dans l'exemple, l'extrémité aval 30 du conduit d'arrivée d'eau 20 est cylindrique, et débouche sur le centre de la chambre de commande 28, et l'extrémité amont 32 du conduit de sortie d'eau 22 est annulaire, et débouche sur la périphérie de la chambre de commande.

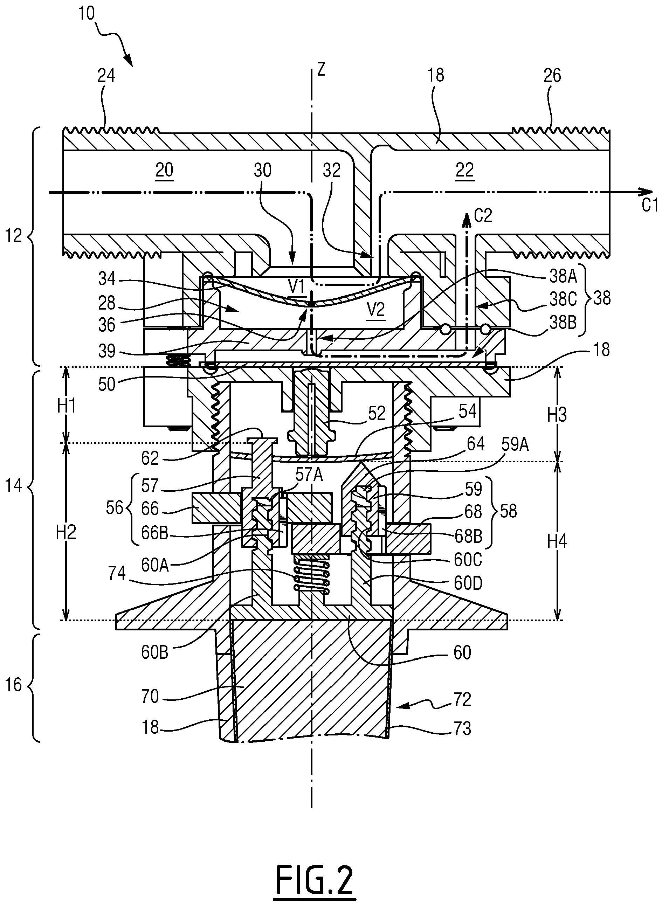

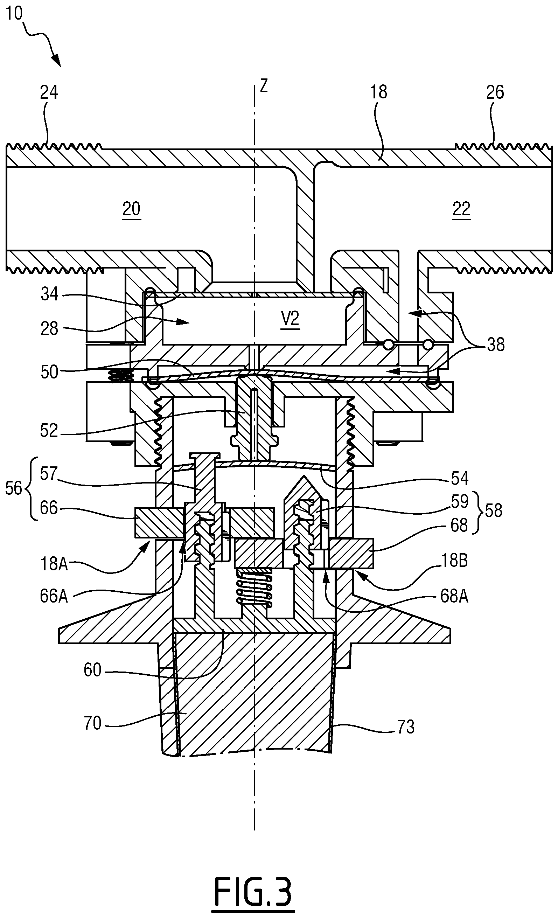

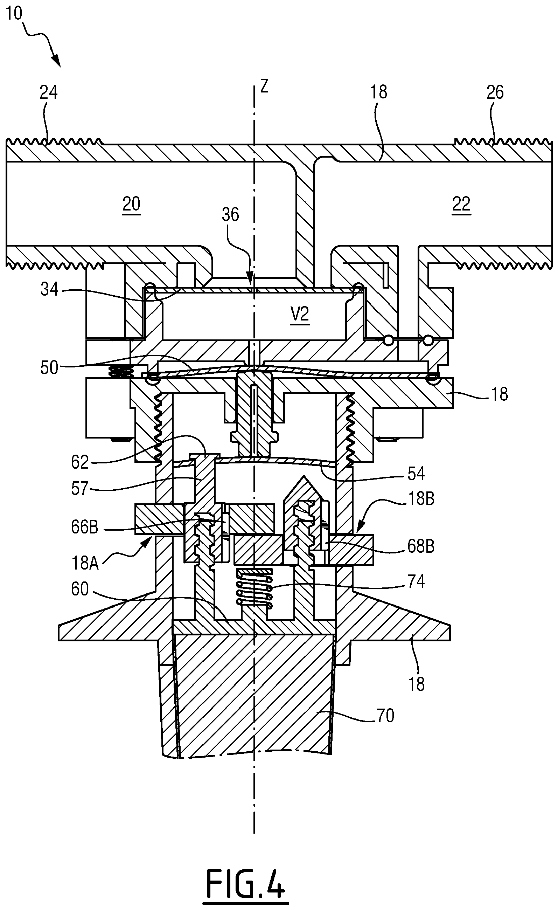

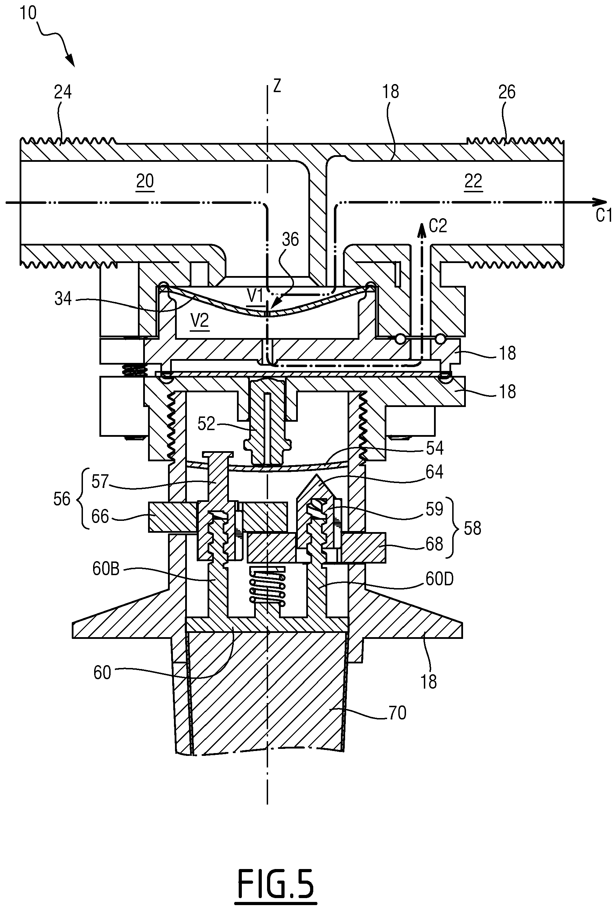

La vanne 12 est commutable entre une configuration ouverte, dans laquelle la circulation d'eau C1 est permise, comme représenté sur les figures 2 et 5, et une configuration fermée, dans laquelle la circulation d'eau C1 est interrompue, comme représenté sur les figures 3 et 4.

La vanne 12 comprend une première membrane 34, disposée dans la chambre de commande 28, et qui sépare la chambre de commande en un premier volume V1 et un deuxième volume V2. En pratique, l'extrémité aval 30 du conduit d'arrivée d'eau 20 et l'extrémité amont 32 du conduit de sortie d'eau 22 débouchent dans le premier volume V1 de la chambre de commande. La circulation d'eau C1 passe donc par le premier volume V1.

La membrane 34 est mobile par rapport au corps 18 entre une position d'ouverture, lorsque la vanne est en configuration ouverte, et une position de fermeture, lorsque la vanne est en configuration fermée. En position de fermeture, la membrane 34 est plaquée contre l'extrémité aval 30 du conduit d'arrivée d'eau 20 et contre l'extrémité amont 32 du conduit de sortie d'eau 22, empêchant ainsi la circulation d'eau C1. Ainsi, lorsque la membrane 34 est en position de fermeture, le premier volume V1 a un volume nul. En position d'ouverture, la membrane 34 est éloignée des extrémités 30 et 32, de sorte à permettre la circulation d'eau C1 au travers du premier volume V1, entre les extrémités 30 et 32.

Par ailleurs, la membrane 34 est élastiquement déformable, et sa position de repos est sa position de fermeture. Par position de repos, on entend la position que prend la membrane 34 par retour élastique quand elle n'est pas soumise à des efforts externes autres que la pression atmosphérique. Ainsi, en l'absence de forces extérieures, la membrane tend à basculer de sa position d'ouverture vers sa position de fermeture.

La membrane 34 comprend un orifice traversant 36, au travers duquel le premier volume V1 et le deuxième volume V2 sont en communication fluidique. L'orifice traversant 36 est en pratique de faibles dimensions en regard des dimensions de la membrane 34. De préférence, l'aire de la section de l'orifice traversant 36 est inférieure à 5% de l'aire de la section de l'extrémité amont 32 du conduit de sortie d'eau 22.

De plus, la vanne 12 comprend un conduit de dérivation 38, qui relie le deuxième volume V2 de la chambre de commande 28 au conduit de sortie d'eau 22, de sorte à permettre une autre circulation d'eau C2 entre le conduit d'arrivée d'eau 20 et le conduit de sortie d'eau 22, par l'intermédiaire du premier volume V1, de l'orifice traversant 36, du deuxième volume V2, puis du conduit de dérivation 38. Le conduit de dérivation 38 est de faibles dimensions en regard des dimensions des conduits d'arrivée d'eau 20 et de sortie d'eau 24. En pratique, l'aire de la section minimale du conduit de dérivation 38 est inférieure à 5% de l'aire de la section interne des conduits 20 et 22.

Dans l'exemple des figures, le conduit de dérivation 38 comprend trois tronçons 38A, 38B et 38C qui forment respectivement un tronçon amont, un tronçon intermédiaire et un tronçon aval du conduit de dérivation. Le tronçon amont 38A est en forme de tube rectiligne et traverse une paroi 39 qui délimite la chambre de commande 28. En configuration d'utilisation du dispositif d'arrosage autonome 10, la paroi 39 délimite le volume V2 vers le bas. Le tronçon intermédiaire 38B est en forme de plaque et s'étend le long de la paroi 39, sur son côté opposé à la chambre de commande 28. Le tronçon aval 38C est en forme de tube rectiligne et s'étend, radialement à un axe longitudinal Z du régulateur 14, sur l'extérieur du tronçon intermédiaire 38B, à travers une partie du corps 18 monobloc avec la paroi 39 et à travers un embout du conduit de sortie d'eau.

Afin de favoriser une évacuation de l'eau présente dans le volume V2 de la chambre de commande 28 hors de la chambre de commande par le conduit de dérivation 38, l'aire de la section de l'orifice traversant 36 est inférieure ou égale à la moitié de l'aire de la section du tronçon amont 38A du conduit de dérivation, et l'aire de la section du tronçon amont 38A est elle-même inférieure à l'aire de la section du tronçon aval 38C du conduit de dérivation. En effet, grâce à ces proportions, une circulation d'eau depuis le conduit d'arrivée d'eau 20 vers le volume V2, par l'intermédiaire de l'orifice traversant 36, est moins aisée qu'une circulation d'eau depuis le volume V2 vers le conduit de sortie d'eau 24, par l'intermédiaire du conduit de dérivation 38.

En pratique, le débit de la circulation d'eau C2 est faible devant le débit de la circulation d'eau C1, par exemple 100 fois plus faible, du fait des faibles dimensions de l'orifice traversant 36 et du conduit de dérivation 38.

Le régulateur 14 est prévu pour sélectivement autoriser, ou interrompre, la circulation d'eau C2 passant dans le conduit de dérivation 38.

Lorsque la circulation d'eau C2 est permise par le régulateur 14, alors la membrane 34 est en position d'ouverture et la vanne 12 est en configuration ouverte. En effet, lorsque la circulation d'eau C2 est permise, la pression hydraulique au sein du premier volume V1 est supérieure à la pression hydraulique au sein du deuxième volume V2. Cette différence de pression provient notamment du fait que la circulation d'eau C1 entraîne une perte de charge, au niveau des extrémités 30 et 32 et au niveau de la membrane 34. La pression dans le conduit de sortie d'eau 22 est ainsi plus faible que la pression dans le conduit d'arrivée d'eau 20. De plus, le débit de la circulation d'eau C2 étant faible devant le débit de la circulation d'eau C1, et la circulation d'eau depuis le volume V2 vers le conduit de sortie d'eau 22 étant facilitée par les proportions des aires des sections de l'orifice traversant 36 et des tronçons 38A et 38C, la circulation d'eau C2 entraîne des pertes de charges négligeables entre le volume V2 et le conduit de sortie d'eau 22. La pression dans le volume V2 est alors identique à la pression dans le conduit de sortie d'eau 22, et plus faible que la pression dans le volume V1. La membrane 34 est ainsi maintenue en position d'ouverture, et n'obstrue pas la circulation d'eau C1. En d'autres termes, la force exercée par la différence de pression entre le premier volume V1 et le deuxième volume V2 est suffisante pour déformer la membrane 34 en position d'ouverture, à l'encontre de son retour élastique en position de fermeture.

Lorsque la circulation d'eau C2 est empêchée par le régulateur 14, alors la membrane 34 est en position de fermeture, le premier volume V1 a un volume nul et la vanne 12 est en configuration fermée. En effet, lorsque la circulation d'eau C2 est empêchée, l'eau présente dans le deuxième volume V2, qui parvient dans le deuxième volume par l'orifice traversant 36 de la membrane 34, ne peut sortir du deuxième volume V2. La pression hydrostatique présente dans l'extrémité aval 30 du conduit d'arrivée d'eau 20 est alors identique à la pression hydrostatique présente dans le deuxième volume V2. De plus, la pression hydrostatique présente dans l'extrémité amont 32 du conduit de sortie d'eau 22 est inférieure à la pression hydrostatique présente dans le deuxième volume V2, puisque le conduit de sortie d'eau 22 n'est pas alimenté en eau. La force exercée sur la membrane 34 du côté du volume V2 est alors supérieure à la force exercée sur la membrane du côté des extrémités aval 30 et amont 32, puisque au niveau de l'extrémité amont 32 du conduit de sortie d'eau 22, les deux côtés de la membrane sont exposés à des pressions hydrostatiques différentes, ce qui conduit à basculer la membrane 34 en position de fermeture. En outre, ce basculement en position de fermeture est favorisé par le retour de la membrane à sa position de repos, par retour élastique.

Par ailleurs, et comme mieux visible sur les figures 3 et 4, une fois la membrane 34 en position de fermeture, l'aire de la surface de la membrane soumise à l'action de la pression hydraulique du côté du deuxième volume V2, qui correspond à la section de la chambre de commande 28 moins la section de l'orifice traversant 36, est supérieure à l'aire de la surface de la membrane soumise à l'action de la pression hydraulique du côté du conduit d'arrivée d'eau 20, qui correspond à la section de l'extrémité aval 30 du conduit d'arrivée d'eau moins la section de l'orifice traversant. L'eau présente dans le deuxième volume V2 exerce alors une force plus importante sur la membrane 34 que l'eau présente dans l'extrémité aval 30 du conduit d'arrivée d'eau 20, ce qui tend à maintenir la membrane en position de fermeture.

Le régulateur 14 est prévu pour autoriser ou interrompre la circulation d'eau C2 passant dans le conduit de dérivation 38 en fonction de l'état du capteur d'humidité 16, plus précisément en fonction du taux d'humidité du sol mesuré par le capteur d'humidité.

En pratique, le régulateur 14 comprend une deuxième membrane 50, disposée dans le conduit de dérivation 38, dans l'exemple dans le tronçon intermédiaire 38B, de sorte à être mobile, par rapport au corps 18, entre une position de fermeture, visible aux figures 3 et 4, dans laquelle la membrane obstrue le conduit de dérivation 38, à la jonction entre les tronçons amont 38A et intermédiaire 38B, empêchant ainsi la circulation d'eau C2, et une position d'ouverture, visible aux figures 2 et 5, dans laquelle la membrane ne s'oppose pas à la circulation d'eau C2.

Avantageusement, la membrane 50 est élastiquement déformable, et sa position de repos est sa position de fermeture. Par position de repos, on entend la position que prend la membrane 50 par retour élastique quand elle n'est pas soumise à des efforts externes autres que la pression atmosphérique. Ainsi, en l'absence de forces extérieures, la membrane 50 tend à basculer de sa position de fermeture vers sa position d'ouverture.

Pour entraîner le déplacement de la membrane entre ses positions d'ouverture et de fermeture, le régulateur 14 comprend un poussoir 52, un organe de basculement bistable 54, un actionneur d'ouverture 56, un actionneur de fermeture 58 et un piston 60, qui est mobile en translation dans le corps 18 selon l'axe longitudinal Z du régulateur 14, en étant entraîné par le capteur d'humidité 16.

Dans l'exemple, l'organe de basculement bistable 54 est une lame, montée dans le corps 18, qui présente deux positions stables, à savoir une position de fermeture et une position de fermeture. La lame 54 est donc une lame bistable. De préférence, la lame bistable 54 est réalisée dans un matériau métallique.

Le poussoir 52 est monté entre la lame bistable 54 et la membrane 50, de sorte à basculer par une translation entre une position de fermeture et une position d'ouverture, selon la position de la lame bistable. En d'autres termes, le poussoir 52 est mobile en translation par rapport au corps 18. De préférence, le poussoir 52 est fixé d'une part à la lame bistable 54, et d'autre part à la membrane 50, par exemple par collage. Ainsi, lorsque la lame bistable et le poussoir basculent en position d'ouverture, alors le poussoir entraîne la membrane 50 en position d'ouverture, et lorsque la lame bistable et le poussoir basculent en position de fermeture, alors le poussoir entraîne la membrane en position de fermeture. La déformation de la membrane 50 et de la lame bistable 54, ainsi que la translation du poussoir 52, s'effectuent selon l'axe Z.

En variante, le poussoir 52 n'est pas fixé à la lame bistable 54 et à la membrane 50. Lorsque la lame bistable bascule en position d'ouverture, la pression hydrostatique s'appliquant sur la membrane 50 est alors suffisante pour entraîner le basculement de la membrane 50 et du poussoir 52 en position d'ouverture.

De manière avantageuse, la lame bistable 54 est dimensionnée de sorte que, lorsque la membrane 50, le poussoir 52 et la lame bistable sont en position de fermeture, la force exercée sur la membrane 50, au niveau du tronçon amont 38A, par la pression hydrostatique présente dans le deuxième volume V2, et transmise à la lame bistable par l'intermédiaire du poussoir 52, n'est pas suffisante pour entraîner le basculement de la lame bistable en position d'ouverture.

Le poussoir 52 est particulièrement avantageux, car il permet de contrôler la position de la membrane 50 à partir de la position de la lame bistable 54 tout en positionnant la lame bistable à distance de la membrane, ce qui facilite la manoeuvre de la lame bistable par les actionneurs d'ouverture 56 et de fermeture 58.

L'actionneur d'ouverture 56 comporte une tête d'ouverture 57 qui comprend une extrémité 62. On note H1 la distance entre l'extrémité 62 et la membrane 50, et H2 la distance entre l'extrémité 62 et le piston 60.

De même, l'actionneur de fermeture 58 comporte une tête de fermeture 59 qui comprend une extrémité 64, et on note H3 la distance entre l'extrémité 64 et la membrane 50, et H4 la distance entre l'extrémité 64 et le piston 60.

Les distances H1, H2, H3 et H4 sont mesurées parallèlement à l'axe Z.

La tête d'ouverture 57 et la tête de fermeture 59 sont solidaires en translation du piston 60, de sorte qu'un déplacement du piston selon l'axe Z entraîne un déplacement identique des têtes d'ouverture et de fermeture.

Le régulateur 14 est configuré pour que l'actionneur d'ouverture 56, et plus précisément sa tête d'ouverture 57, bascule la lame bistable 54 en position d'ouverture lorsque la distance H1 atteint une valeur de seuil prédéterminée, appelée « seuil d'ouverture », correspondant à une position d'ouverture du piston 60. De manière analogue, le régulateur 14 est configuré pour que l'actionneur de fermeture 58, et plus précisément sa tête de fermeture 59, bascule la lame bistable 54 en position de fermeture lorsque la distance H3 atteint une valeur de seuil prédéterminée, appelée « seuil de fermeture », correspondant à une position de fermeture du piston.

Dans l'exemple, la tête d'ouverture 57 de l'actionneur d'ouverture 56 s'étend au travers de la lame bistable 54, et son extrémité 62 en forme de collerette est prévue pour tirer sur la lame bistable afin de provoquer son basculement, de sa position de fermeture à sa position d'ouverture, lorsque la distance H1 augmente jusqu'à atteindre le seuil d'ouverture.

Dans l'exemple, l'extrémité 64 de la tête de fermeture 59, qui est en forme de pointe, est prévue pour pousser sur la lame bistable afin de provoquer son basculement en position de fermeture lorsque la distance H3 diminue jusqu'à atteindre le seuil de fermeture.

En pratique, les distances H1 et H3 sont déterminées par la géométrie des éléments constitutifs du régulateur 14, en particulier par la position de la lame bistable 54 au sein du corps 18, et sont donc des propriétés intrinsèques du dispositif d'arrosage autonome 10, qui dépendent de sa conception.

À l'inverse, et de manière particulièrement avantageuse, les distances H2 et H4 sont réglables, ce qui permet de régler la position d'ouverture du piston 60 correspondant au seuil d'ouverture et de régler la position de fermeture du piston correspondant au seuil de fermeture.

Pour cela, l'actionneur d'ouverture 56 comprend un dispositif de réglage 66, qui permet de régler la distance H2. Dans l'exemple, la tête d'ouverture 57 de l'actionneur d'ouverture 56 est vissée sur le piston 60 au moyen d'un taraudage 57A prévu sur la tête d'ouverture et d'un filetage 60A prévu sur une tige 60B qui fait partie du piston 60.Le dispositif de réglage 66 est une molette de réglage, qui est maintenue sur le corps 18 de sorte à être uniquement mobile en rotation par rapport au corps, qui s'étend partiellement en-dehors du corps 18 à travers une fenêtre 18A et qui permet à un utilisateur de visser ou de dévisser la tête d'ouverture 57 de l'actionneur d'ouverture 56 par rapport au piston 60, faisant ainsi varier la distance H2. Dans l'exemple, la tête d'ouverture 57 s'étend au travers d'une ouverture centrale 66A ménagée dans la molette de réglage 66, de sorte à être mobile en translation par rapport à la molette de réglage. L'actionneur d'ouverture 56 comprend une clavette 66B, de sorte qu'une rotation de la molette de réglage entraîne une rotation de la tête d'ouverture. L'actionneur d'ouverture 56 est donc accessible depuis l'extérieur du dispositif d'arrosage autonome 10, par l'intermédiaire de la molette de réglage 66.

De même, la tête de fermeture 59 de l'actionneur de fermeture 58 est vissée sur le piston 60 au moyen d'un taraudage 59A prévu sur la tête de fermeture et d'un filetage 60C prévu sur une tige 60D qui fait partie du piston 60. De même, l'actionneur de fermeture comprend un dispositif de réglage 68, qui est dans l'exemple une molette de réglage qui permet de régler la distance H4, et qui fonctionne comme le dispositif de réglage 66. La molette de réglage 68 s'étend ainsi partiellement en-dehors du corps 18 à travers une fenêtre 18B, la tête de fermeture 59 s'étend au travers d'une ouverture centrale 68A ménagée dans la molette de réglage 68 et l'actionneur de fermeture comprend une clavette 68B de sorte qu'une rotation de la molette de réglage entraîne une rotation de la tête de fermeture.

Le capteur d'humidité 16 est en pratique disposé dans le sol dont le taux d'humidité doit être mesuré. En pratique, le capteur d'humidité 16 comprend une quantité 70 de matériau hygroscopique, c'est-à-dire que son taux d'humidité varie en fonction du taux d'humidité du sol environnant le matériau. De plus, le volume de la quantité 70 varie en fonction du taux d'humidité de son matériau. Ainsi, lorsque le sol environnant le matériau gagne en humidité, le matériau de la quantité 70 gagne également en humidité, et son volume augmente en fonction de ce gain d'humidité, c'est-à-dire que le matériau se dilate. À l'inverse, lorsque le sol environnant le matériau perd en humidité, alors le matériau perd également en humidité, et son volume diminue en fonction de cette perte d'humidité, c'est-à-dire que le matériau se contracte.

Le matériau de la quantité 70 est par exemple du bois, ou encore de l'argile.

Le matériau de la quantité 70 est en pratique disposé dans le corps 18, et le corps présente des ouvertures 72, qui permettent au matériau d'être en contact direct avec le sol environnant. Avantageusement, la quantité 70 est maintenue dans le corps 18 par un élément de retenue 73, de sorte à éviter sa dispersion au travers des ouvertures 72. L'élément de retenue 73 est prévu pour être perméable à l'humidité, ou pour être lui-même hygroscopique, de sorte à permettre au taux d'humidité de la quantité 70 de s'équilibrer avec le taux d'humidité du sol environnant le capteur d'humidité. En d'autres termes, l'élément de retenue 73 ne forme pas une barrière étanche entre la quantité 70 et le sol environnant la quantité 70. De préférence, l'élément de retenue 73 est un grillage ou un filet, ou alors comprend à la fois un grillage et un filet.

La quantité 70 est en contact avec le piston 60. Ainsi, lorsque la quantité 70 se dilate, elle pousse sur le piston 60, vers le haut en configuration d'utilisation du dispositif d'arrosage autonome 10, ce qui entraîne un déplacement du piston selon l'axe Z, en direction de la chambre de commande 28. En effet, la quantité 70 ne peut se dilater qu'en direction du piston 60, car la quantité est maintenu par ailleurs par le corps 18, qui est rigide, et par l'élément de retenue 73 qui empêche la quantité 70 de s'étendre dans les ouvertures 72.

À l'inverse, lorsque la quantité 70 se contracte, le piston 60 est repoussé par un organe élastique de rappel 74 en direction de la quantité, de sorte à rester en contact avec la quantité. De préférence, l'organe élastique de rappel 74 est un ressort hélicoïdal. Dans l'exemple, le ressort 74 prend appui sur le dispositif de réglage 68 pour repousser le piston 60.

En variante, le ressort 74 prend appui directement sur le corps 18.

Le ressort 74 est prévu pour que la force de rappel exercée sur le piston 60 ne s'oppose pas au déplacement du piston lorsque la quantité 70 se dilate.

On décrit à présent, en référence aux figures 2 à 5, quatre configurations du dispositif d'arrosage autonome 10, de sorte à expliquer plus en détail les processus d'ouverture et de fermeture de la vanne 12.

À la figure 2, la vanne 12 est en configuration ouverte, et le dispositif d'arrosage autonome 10 est dans une configuration avant fermeture, c'est-à-dire avant la bascule de la vanne 12 en configuration fermée. Dans cette configuration, les circulations d'eau C1 et C2 sont permises, les membranes 34 et 50 ainsi que la lame bistable 54 étant en position d'ouverture.

En pratique, dans cette configuration, le piston 60 est très proche de sa position correspondant au seuil de fermeture, de sorte que la tête de fermeture 59 de l'actionneur de fermeture 58 est en contact avec la lame bistable 54, mais sans exercer un effort sur la lame bistable suffisant pour entraîner son basculement de sa position d'ouverture vers sa position de fermeture. Ainsi, dans l'exemple, l'extrémité 64 de la tête de fermeture 59 est en contact avec la lame bistable, mais ne pousse pas sur la lame. Dans cette configuration, le taux d'humidité du sol entourant le dispositif d'arrosage autonome est en cours d'augmentation, entraînant une dilatation du matériau de la quantité 70.

À la figure 3, la vanne 12 est en configuration fermée, et le dispositif d'arrosage autonome 10 est dans une configuration après fermeture. En pratique, le passage de la configuration avant fermeture de la figure 2 à la configuration après fermeture de la figure 3 s'effectue lorsque le piston 60 atteint sa position correspondant au seuil de fermeture, en étant poussé par la dilatation du matériau 70, de sorte que la tête de fermeture 59 entraîne le basculement de la lame bistable 54 en position de fermeture, dans l'exemple en poussant sur la lame bistable par l'intermédiaire de son extrémité 64. Le basculement de la lame bistable en position de fermeture entraîne le basculement de la membrane 50 en position de fermeture, ce qui interrompt la circulation d'eau C2, entraînant ainsi la membrane 34 en position de fermeture et interrompant ainsi la circulation d'eau C1.

Par ailleurs, lorsque la vanne 12 est en configuration fermée, une dilatation supplémentaire du matériau de la quantité 70 entraînant un déplacement du piston 60 au-delà de sa position correspondant au seuil de fermeture est possible, car à la suite du basculement de la lame bistable 54, l'extrémité 64 de la tête de fermeture 59 est située à distance de la lame bistable.

À partir de la configuration de la figure 3, une diminution de l'humidité du sol, entraînant une contraction du matériau hygroscopique de la quantité 70, entraîne un déplacement du piston 60 sous l'effet du ressort 74, jusqu'à atteindre la configuration de la figure 4, dans laquelle la vanne 12 est toujours en configuration fermée, et dans laquelle le dispositif d'arrosage autonome 10 est dans une configuration avant ouverture, c'est-à-dire avant la bascule de la vanne 12 en configuration ouverte. En pratique, dans cette configuration avant ouverture, le piston 60 est très proche de sa position correspondant au seuil d'ouverture, de sorte que la tête d'ouverture 57 de l'actionneur d'ouverture 56 est en contact avec la lame bistable 54, mais sans exercer un effort sur la lame bistable suffisant pour entraîner son basculement. Ainsi, dans l'exemple, l'extrémité 62 de la tête d'ouverture est en contact avec la lame bistable, mais ne tire pas sur la lame. Dans cette configuration, le taux d'humidité du sol entourant le dispositif d'arrosage autonome est en cours de diminution, entraînant une contraction du matériau de la quantité 70.

À la figure 5, la vanne 12 est en configuration ouverte, et le dispositif d'arrosage autonome 10 est dans une configuration après ouverture. En pratique, le passage de la configuration avant ouverture de la figure 4 à la configuration après ouverture de la figure 5 s'effectue lorsque le piston 60 atteint sa position correspondant au seuil d'ouverture, en étant poussé par le ressort 74, de sorte que la tête d'ouverture 57 entraîne le basculement de la lame bistable en position d'ouverture, dans l'exemple en tirant sur la lame bistable par l'intermédiaire de son extrémité 62. Le basculement de la lame bistable en position d'ouverture entraîne le basculement de la membrane 50 en position d'ouverture, ce qui permet la reprise de la circulation d'eau C2, entraînant ainsi la membrane 34 en position d'ouverture et permettant ainsi la reprise de la circulation d'eau C1.

Par ailleurs, lorsque la vanne 12 est en configuration ouverte, une contraction supplémentaire du matériau de la quantité 70 entraînant un déplacement du piston 60 sous l'effet du ressort 74 au-delà de sa position correspondant au seuil d'ouverture est possible, car à la suite du basculement de la lame bistable 54, l'extrémité 62 de la tête d'ouverture 57 est située à distance de la lame bistable.

Dans l'exemple, la course du piston 60 entre sa position correspondant au seuil d'ouverture, comme à la figure 5, et sa position correspondant au seuil de fermeture, comme à la figure 3, est comprise entre 0,5 mm et 4 mm, de préférence égale à 1 mm. Cette course est déterminée par un taux d'humidité maximal du matériau de la quantité 70, et donc du sol, qui entraîne le basculement de la vanne 12 en configuration fermée lorsqu'il est atteint, et par un taux d'humidité minimal du matériau de la quantité 70, qui entraîne le basculement de la vanne en configuration ouverte lorsqu'il est atteint. Ces deux taux d'humidité définissent une plage d'humidité du sol dans laquelle le dispositif d'arrosage autonome 10 maintient le taux d'humidité du sol en ouvrant et en fermant, de manière autonome, la vanne 12. Cette plage d'humidité est, par exemple, comprise entre 10% et 35%.

De manière particulièrement avantageuse, grâce à la présence de deux actionneurs 56 et 58 distincts l'un de l'autre, c'est-à-dire grâce à la présence d'un actionneur dédié à l'ouverture de la vanne 12 et à la présence d'un autre actionneur dédié à la fermeture de la vanne, le seuil de fermeture provoquant le basculement de la vanne 12 en configuration fermée est distinct du seuil d'ouverture provoquant le basculement de la vanne en configuration ouverte. La présence de deux seuils distincts permet d'optimiser l'irrigation de la zone à irriguer, en contrôlant finement la plage d'humidité du sol dans laquelle le taux d'humidité du sol est maintenu par le dispositif d'arrosage autonome 10, puisque le seuil de fermeture correspond à un taux d'humidité maximal et le seuil d'ouverture correspond à un taux d'humidité minimal. Une tel contrôle est plus efficace pour irriguer une zone que d'autres systèmes existants, pour lesquels il n'existe pas de différenciation entre le seuil d'ouverture et le seuil de fermeture de la vanne.

En outre, et de manière particulièrement avantageuse, en réglant les hauteurs H2 et H4, et donc en modifiant les seuils d'ouverture et de fermeture, on fait varier la plage d'humidité du sol dans laquelle le dispositif d'arrosage autonome 10 maintient le sol de la zone à irriguer. Cette plage d'humidité est alors particulièrement simple à adapter, selon la nature des plantations devant être irriguées par le dispositif d'arrosage autonome 10. Par exemple, pour certaines plantations nécessitant un taux d'humidité variant faiblement, la plage d'humidité du sol est réduite, correspondant alors à une course faible du piston 60. Dans un tel exemple, la vanne 12 est amenée à fréquemment basculer entre ses configurations ouverte et fermée. À l'inverse, pour d'autres plantations tolérant bien de fortes variations d'humidité du sol, la plage d'humidité du sol est augmentée, correspondant alors à une course plus élevée du piston 60. Dans un tel exemple, la vanne 12 est amenée à basculer moins fréquemment entre ses configuration ouvertes et fermées.

Pour optimiser l'irrigation de la zone à irriguer, la lame bistable 54 est particulièrement intéressante. En effet, grâce à la présence de la lame bistable, l'ouverture et la fermeture de la vanne 12 sont franches, c'est-à-dire immédiates, et ne sont donc pas progressives ni sujettes à des oscillations. Une telle ouverture et fermeture franche de la vanne est particulièrement avantageuse pour que l'irrigation de la zone à irriguer soit homogène. À l'inverse, une fermeture et une ouverture progressive ou oscillante de la vanne conduirait à alimenter les moyens d'irrigation avec une circulation d'eau dont le débit varie progressivement ou qui est interrompu. Lorsque les moyens d'irrigation sont par exemple un asperseur, ou un arroseur oscillant, alors la diminution et l'augmentation progressive du débit conduisent à arroser la zone proche des moyens d'irrigation avec de plus grandes quantités d'eau que les zones éloignées des moyens d'irrigation, car lorsque la vanne est en cours de fermeture et d'ouverture, les zones éloignées des moyens d'irrigation ne reçoivent pas d'eau, à cause du débit réduit. Ainsi, l'irrigation des plantations ne serait pas homogène, ce qui est négatif.

En variante non-représentée de l'invention, l'organe de basculement 54 n'est pas un organe de basculement bistable, mais progressif. Dans une telle variante, l'ouverture et la fermeture de la vanne 12 sont progressives. Une telle variante est par exemple adaptée lorsque les moyens d'irrigation sont un système goutte-à-goutte, qui fonctionne avec un débit faible.

En variante non-représentée de l'invention, la tête d'ouverture 57 de l'actionneur d'ouverture 56 est configurée pour pousser sur la lame bistable 54 et la tête de fermeture 59 de l'actionneur de fermeture 58 est configurée pour tirer sur la lame bistable 54.

En variante non-représentée de l'invention, le régulateur 14 ne comprend pas de membrane 50, et le poussoir 52 obstrue directement la circulation d'eau C2, par exemple au niveau du conduit de dérivation 38.

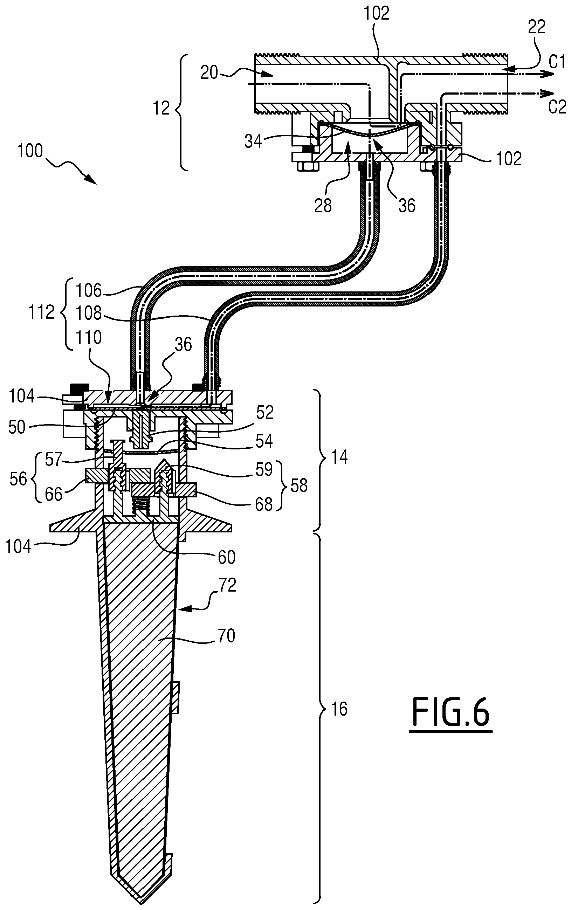

On décrit à présent, en référence à la figure 6, un deuxième mode de réalisation d'un dispositif d'arrosage autonome 100. Dans le deuxième mode de réalisation, les éléments analogues à ceux du premier mode de réalisation portent les mêmes références et fonctionnent de la même façon. Si une référence est utilisée dans la description du deuxième mode de réalisation sans être reproduite sur la figure 6, elle correspond à la partie ou pièce portant la même référence dans le premier mode de réalisation. Dans ce qui suit, on décrit principalement les différences entre le deuxième mode de réalisation et le premier mode de réalisation.

Une des principales différences du deuxième mode de réalisation avec le premier mode est que le dispositif d'arrosage autonome 100 n'est pas rigide et d'un seul tenant.

Dans le deuxième mode de réalisation, le dispositif d'arrosage autonome 100 présente un premier corps 102, dans lequel est formé la vanne 12, et un deuxième corps 104, distinct du premier corps 102, dans lequel sont formés le régulateur 14 et le capteur d'humidité 16. Dans l'exemple, le premier corps 102 et le deuxième corps 104 sont chacun formés de plusieurs éléments assemblés entre eux, de sorte à former deux ensembles rigides distincts.

Le premier corps 102 et le deuxième corps 104 sont reliés ensemble par un premier tuyau 106 et par un deuxième tuyau 108.

Le régulateur 14 comprend un circuit de dérivation 110, dans lequel la membrane 50 est mobile. Ainsi, la membrane 50 empêche une circulation d'eau dans le circuit de dérivation lorsqu'elle est en position de fermeture, et autorise une circulation d'eau dans le circuit de dérivation lorsqu'elle est en position d'ouverture.

Le premier tuyau 106 relie le deuxième volume V2 de la chambre de commande 28 au circuit de dérivation 110, et le deuxième tuyau 108 relie le circuit de dérivation 110 au conduit de sortie d'eau 22.

Ainsi, le premier tuyau 106, le circuit de dérivation 110 et le deuxième tuyau 108 forment ensemble un conduit de dérivation 112 de la vanne 12, qui fonctionne comme le conduit de dérivation 38 du premier mode de réalisation. On comprend alors que dans le deuxième mode de réalisation, la circulation d'eau C2 relie le conduit d'arrivée d'eau 20 et le conduit de sortie d'eau 22 par l'intermédiaire du premier volume V1, de l'orifice traversant 36, du deuxième volume V2, puis du conduit de dérivation 112.

Le fonctionnement du dispositif d'arrosage autonome 100 est donc identique au fonctionnement du dispositif d'arrosage autonome 10 du premier mode de réalisation.

Le dispositif d'arrosage autonome 100 est particulièrement avantageux pour optimiser l'arrosage de la zone à irriguer, car il permet de déporter le capteur 16 de la vanne 12. Par exemple, la vanne 12 est située au bord d'une zone à irriguer, à proximité des moyens d'irrigation, alors que le capteur 16 et le régulateur 14 sont situés au centre de la zone à irriguer, ce qui permet de mesurer un taux d'humidité du sol plus représentatif de la zone à irriguer, par rapport à une mesure réalisée au bord de la zone à irriguer.

Déporter le capteur 16 de la vanne 12 est également pratique pour éloigner la vanne 12 de la zone à irriguer, par exemple lorsque la vanne est connectée aux moyens d'irrigation par des tuyaux de grande dimension.

Toute caractéristique décrite pour un mode de réalisation ou une variante dans ce qui précède peut être mise en oeuvre pour les autres modes de réalisation et variantes décrits précédemment, pour autant que techniquement faisable.

## Revendications

1. Dispositif d'arrosage autonome (10 ; 100) comprenant :
- une vanne (12), commutable entre une configuration ouverte et une configuration fermée, présentant un conduit d'arrivée d'eau (20), un conduit de sortie d'eau (22), une chambre de commande (28) par l'intermédiaire de laquelle les conduits d'arrivée d'eau et de sortie d'eau sont reliés et une première membrane (34), disposée dans la chambre de commande et mobile entre une position de fermeture, lorsque la vanne est en configuration fermée, dans laquelle une circulation d'eau (C1) au travers de la vanne (12) est empêchée, et une position d'ouverture, lorsque la vanne est en configuration ouverte, dans laquelle une circulation d'eau (C1) au travers de la vanne n'est pas empêchée ;
- un régulateur (14), comprenant un organe de basculement (54) actionnable de sorte à entraîner le basculement de la vanne entre ses configurations ouverte et fermée en entraînant le déplacement de la première membrane (34) entre ses positions d'ouverture et de fermeture ; et
- un capteur d'humidité (16), configuré pour être disposé dans un sol et pour actionner le régulateur (14) en fonction d'un taux d'humidité du sol,
**caractérisé en ce que** :
- le régulateur comprend un actionneur d'ouverture (56), qui comporte une tête d'ouverture (57) configurée pour actionner l'organe de basculement (54), de sorte à entraîner le déplacement de la première membrane depuis sa position de fermeture vers sa position d'ouverture lorsqu'un taux d'humidité du sol, mesuré par le capteur d'humidité (16), atteint un taux d'humidité minimal,
- le régulateur (14) comprend un actionneur de fermeture (58), qui comporte une tête de fermeture (59) configurée pour actionner l'organe de basculement (54), de sorte à entraîner le déplacement de la première membrane depuis sa position d'ouverture vers sa position de fermeture lorsqu'un taux d'humidité du sol, mesuré par le capteur d'humidité, atteint un taux d'humidité maximal, et
- l'actionneur d'ouverture et l'actionneur de fermeture sont distincts l'un de l'autre.

2. Dispositif d'arrosage autonome (10 ; 100) selon la revendication 1, dans lequel le capteur d'humidité (16) comprend une quantité (70) de matériau hygroscopique dont un volume varie en fonction du taux d'humidité du sol, dans lequel le régulateur (14) comprend un piston (60), mobile en étant entraîné par le matériau, et dans lequel les têtes d'ouverture (57) et de fermeture (59) sont entraînées par le piston.

3. Dispositif d'arrosage autonome (10 ; 100) selon l'une des revendications 1 et 2, dans lequel l'actionneur d'ouverture (56) comprend un dispositif de réglage (66) configuré pour régler un taux d'humidité minimal détecté par le capteur d'humidité (16) et entraînant le déplacement de la première membrane (34) depuis sa position de fermeture vers sa position d'ouverture, et dans lequel l'actionneur de fermeture (58) comprend un dispositif de réglage (68) configuré pour régler un taux d'humidité maximal détecté par le capteur d'humidité et entraînant le déplacement de la première membrane depuis sa position d'ouverture vers sa position de fermeture.

4. Dispositif d'arrosage autonome (10 ; 100) selon la revendication 3, dans lequel le dispositif de réglage (56) de l'actionneur d'ouverture (56) et le dispositif de réglage (68) de l'actionneur de fermeture (58) sont accessibles depuis l'extérieur d'un corps (18) du dispositif d'arrosage autonome (10 ; 100).

5. Dispositif d'arrosage autonome (10 ; 100) selon l'une des revendications 3 et 4, considérée en combinaison avec la revendication 2, dans lequel la tête d'ouverture (57) et la tête de fermeture (59) sont vissées sur le piston (60), dans lequel le dispositif de réglage (66) de l'actionneur d'ouverture (56) est configuré pour visser ou dévisser la tête d'ouverture par rapport au piston, de sorte à régler une distance (H2) entre une extrémité (62) de la tête d'ouverture et le piston, et dans lequel le dispositif de réglage (68) de l'actionneur de fermeture (58) est configuré pour visser ou dévisser la tête de fermeture par rapport au piston, de sorte à régler une distance (H4) entre une extrémité (64) de la tête de fermeture et le piston.

6. Dispositif d'arrosage autonome (10 ; 100) selon l'une des revendications précédentes, dans lequel l'organe de basculement (54) est bistable.

7. Dispositif d'arrosage autonome (10 ; 100) selon la revendication 6, dans lequel l'organe de basculement (54) est une lame bistable, dans lequel une première tête parmi la tête d'ouverture (57) et la tête de fermeture (59) est configurée pour tirer sur la lame bistable de sorte à entraîner le basculement de la vanne (12) entre ses configurations ouverte et fermée, et dans lequel une deuxième tête parmi la tête d'ouverture et la tête de fermeture est configurée pour pousser sur la lame bistable de sorte à entraîner le basculement de la vanne entre ses configurations fermée et ouverte.

8. Dispositif d'arrosage autonome (10 ; 100) selon l'une des revendications précédentes, dans lequel la vanne (12) comprend un conduit de dérivation (38 ; 112), qui relie la chambre de commande (28) au conduit de sortie d'eau (22), dans lequel, lorsqu'une circulation d'eau (C2) au travers du conduit de dérivation est autorisée, alors la vanne est en configuration ouverte, dans lequel, lorsque la circulation d'eau (C2) au travers du conduit de dérivation est interrompue, alors la vanne est en configuration fermée, et dans lequel l'organe de basculement (54) est configuré pour sélectivement autoriser ou interrompre la circulation d'eau (C2) au travers du conduit de dérivation.

9. Dispositif d'arrosage autonome (10 ; 100) selon la revendication 8, dans lequel le régulateur (14) comprend une deuxième membrane (50), disposée dans le conduit de dérivation (38 ; 112), mobile entre une position d'ouverture, dans laquelle la deuxième membrane ne s'oppose pas à la circulation d'eau (C2) au travers du conduit de dérivation, et une position de fermeture, dans laquelle la deuxième membrane s'oppose à la circulation d'eau au travers du conduit de dérivation, et dans lequel le basculement de l'organe de basculement (54) entraîne le déplacement de la deuxième membrane (50) entre ses positions d'ouverture et de fermeture.

10. Dispositif d'arrosage autonome (10 ; 100) selon la revendication 9, dans lequel le régulateur (14) comprend un poussoir (52), monté entre l'organe de basculement (54) et la deuxième membrane (50), et fixé d'une part à l'organe de basculement, et d'autre part à la deuxième membrane.

## Patentansprüche

1. Autonome Bewässerungsvorrichtung (10; 100) bestehend aus:
- einem Ventil (12), umschaltbar zwischen einer offenen und einer geschlossenen Konfiguration, mit einem Wasserzulaufrohr (20), einem Wasserablaufrohr (22), einer Steuerkammer (28), durch die die Wasserzulauf- und -ablaufrohre verbunden sind, und einer ersten Membran (34), die in der Steuerkammer angeordnet und zwischen einer geschlossenen Position beweglich ist, wenn sich das Ventil in einer geschlossenen Konfiguration befindet, in der ein Wasserfluss (C1) durch das Ventil (12) verhindert wird, und in einer offenen Position, wenn sich das Ventil in einer offenen Konfiguration befindet, in der ein Wasserfluss (C1) durch das Ventil nicht verhindert wird;
- einem Regler (14), der eine Kippvorrichtung (54) umfasst, die so betätigt werden kann, dass das Ventil zwischen seiner offenen und geschlossenen Konfiguration kippt, indem die erste Membran (34) zwischen ihrer offenen und geschlossenen Position bewegt wird; und
- einem Feuchtigkeitssensor (16), der so konfiguriert ist, dass er in einem Boden platziert wird und den Regler (14) entsprechend einem Bodenfeuchtigkeitsgehalt betätigt,
**dadurch gekennzeichnet, dass**:
- der Regler einen Öffnungsantrieb (56) aufweist, der einen Öffnungskopf (57) umfasst, der so konfiguriert ist, dass er das Kippelement (54) betätigt, um zu bewirken, dass sich die erste Membran von ihrer geschlossenen Position in ihre offene Position bewegt, wenn ein vom Feuchtigkeitssensor (16) gemessener Bodenfeuchtigkeitsgehalt einen minimalen Feuchtigkeitsgehalt erreicht;
- der Regler (14) einen Schließantrieb (58) aufweist, der einen Schließkopf (59) umfasst, der so konfiguriert ist, dass er das Kippelement (54) betätigt, um zu bewirken, dass sich die erste Membran von ihrer offenen Position in ihre geschlossene Position bewegt, wenn ein vom Feuchtigkeitssensor gemessener Bodenfeuchtigkeitsgehalt einen maximalen Feuchtigkeitsgehalt erreicht; und
- der Öffnungsantrieb und der Schließantrieb voneinander getrennt sind.

2. Autonome Bewässerungsvorrichtung (10; 100) nach Anspruch 1, wobei der Feuchtigkeitssensor (16) eine Menge (70) eines hygroskopischen Materials umfasst, deren Volumen entsprechend dem Bodenfeuchtigkeitsgehalt variiert, wobei der Regler (14) einen Kolben (60) umfasst, der durch den Antrieb durch das Material bewegt werden kann, und wobei die Öffnungs- (57) und Schließköpfe (59) durch den Kolben angetrieben werden.

3. Autonome Bewässerungsvorrichtung (10; 100) nach einem der Ansprüche 1 und 2, wobei der Öffnungsantrieb (56) eine Einstellvorrichtung (66) umfasst, die so konfiguriert ist, dass sie einen von dem Feuchtigkeitssensor (16) erfassten minimalen Feuchtigkeitsgehalt einstellt und bewirkt, dass sich die erste Membran (34) von ihrer geschlossenen Position in ihre offene Position bewegt, und wobei der Schließantrieb (58) eine Einstellvorrichtung (68) umfasst, die so konfiguriert ist, dass sie einen von dem Feuchtigkeitssensor erfassten maximalen Feuchtigkeitsgehalt einstellt und bewirkt, dass sich die erste Membran von ihrer offenen Position in ihre geschlossenen Position bewegt.

4. Autonome Bewässerungsvorrichtung (10; 100) nach Anspruch 3, wobei die Einstellvorrichtung (56) des Öffnungsantriebs (56) und die Einstellvorrichtung (68) des Schließantriebs (58) von der Außenseite eines Körpers (18) der autonomen Bewässerungseinrichtung (10; 100) zugänglich sind.

5. Autonome Bewässerungsvorrichtung (10; 100) nach einem der Ansprüche 3 und 4, in Kombination mit Anspruch 2 betrachtet, wobei der Öffnungskopf (57) und der Schließkopf (59) auf den Kolben (60) aufgeschraubt sind, wobei die Einstellvorrichtung (66) des Öffnungsantriebs (56) so konfiguriert ist, dass sie den Öffnungskopf in Bezug auf den Kolben an- oder abschraubt, sodass ein Abstand (H2) zwischen einem Ende (62) des Öffnungskopfes und dem Kolben eingestellt wird, und wobei die Einstellvorrichtung (68) des Schließantriebs (58) so konfiguriert ist, dass sie den Schließkopf in Bezug auf den Kolben an- oder abschraubt, sodass ein Abstand (H4) zwischen einem Ende (64) des Schließkopfes und dem Kolben eingestellt wird.

6. Autonome Bewässerungsvorrichtung (10; 100) nach einem der vorhergehenden Ansprüche, wobei das Kippelement (54) bistabil ist.

7. Autonome Bewässerungsvorrichtung (10; 100) nach Anspruch 6, wobei das Kippelement (54) eine bistabile Klinge ist, wobei ein erster Kopf zwischen dem Öffnungskopf (57) und dem Schließkopf (59) so konfiguriert ist, dass er an der bistabilen Klinge zieht, um das Ventil (12) zwischen seiner offenen und geschlossenen Konfiguration kippen zu lassen, und wobei ein zweiter Kopf zwischen dem Öffnungskopf und dem Schließkopf so konfiguriert ist, dass er auf die bistabile Klinge drückt, um das Ventil zwischen seiner geschlossenen und offenen Konfiguration kippen zu lassen.

8. Autonome Bewässerungsvorrichtung (10; 100) nach einem der vorhergehenden Ansprüche, wobei das Ventil (12) eine Bypassleitung (38; 112) umfasst, die die Steuerkammer (28) mit dem Wasserablaufrohr (22) verbindet, wobei sich das Ventil in einer offenen Konfiguration befindet, wenn ein Wasserfluss (C2) durch die Bypassleitung zulässig ist, wobei sich das Ventil in einer geschlossenen Konfiguration befindet, wenn der Wasserfluss (C2) durch die Bypassleitung unterbrochen wird, und wobei das Kippelement (54) so konfiguriert ist, dass es selektiv den Wasserfluss (C2) durch die Bypassleitung zulässt oder unterbricht.

9. Autonome Bewässerungsvorrichtung (10; 100) nach Anspruch 8, wobei der Regler (14) eine zweite Membran (50) umfasst, die in der Bypassleitung (38; 112) angeordnet ist und zwischen einer Öffnungsstellung, wobei die zweite Membran dem Wasserfluss (C2) durch die Bypassleitung nicht entgegensteht, und einer geschlossenen Stellung beweglich ist, wobei die zweite Membran dem Wasserfluss durch die Bypassleitung entgegenwirkt, und wobei das Kippen des Kippelements (54) bewirkt, dass sich die zweite Membran (50) zwischen ihrer geöffneten und geschlossenen Position bewegt.

10. Autonome Bewässerungsvorrichtung (10; 100) nach Anspruch 9, wobei der Regler (14) einen Schieber (52) umfasst, der zwischen dem Kippelement (54) und der zweiten Membran (50) montiert und einerseits an dem Kippelement und andererseits an der zweiten Membran befestigt ist.

## Claims

1. Autonomous irrigation device (10; 100) including:
- a valve (12), switchable between an open and a closed configuration, having a water inlet pipe (20), a water outlet pipe (22), a control chamber (28) through which the water inlet and outlet pipes are connected and a first membrane (34), placed in the control chamber and movable between a closed position, where the valve is in a closed configuration, in which the circulation of water (C1) through the valve (12) is prevented, and an open position, where the valve is in an open configuration, in which the circulation of water (C1) through the valve is not prevented;
- a regulator (14), comprising a tilting element (54) operable so as to cause the valve to tilt between its open and closed configurations by causing the first membrane (34) to move between its open and closed positions; and
- a humidity sensor (16), configured to be placed in soil and operate the regulator (14) according to soil moisture level,
**characterized in that**:
- the regulator comprises an opening actuator (56), which comprises an opening head (57) configured to operate the tilting element (54), so as to cause the first membrane to move from its closed position to its open position when the soil moisture level, measured by the humidity sensor (16), reaches a minimum level,
- the regulator (14) comprises a closing actuator (58), which comprises a closing head (59) configured to operate the tilting element (54), so as to cause the first membrane to move from its open position to its closed position when the soil moisture level, measured by the humidity sensor, reaches a maximum level, and
- The opening actuator and the closing actuator are separate from each other.

2. An autonomous irrigation device (10; 100) according to claim 1, wherein the humidity sensor (16) comprises a quantity (70) of hygroscopic material the volume of which varies according to the moisture level of the soil, wherein the regulator (14) comprises a piston (60), movable by being driven by the material, and wherein the opening (57) and closing heads (59) are driven by the piston.

3. An autonomous irrigation device (10; 100) according to any one of claims 1 and 2, wherein the opening actuator (56) comprises an adjuster (66) configured to adjust a minimum moisture level detected by the humidity sensor (16) and causing the first membrane (34) to be moved from its closed position to its open position, and wherein the closing actuator (58) comprises an adjusting device (68) configured to regulate a moisture level detected by the humidity sensor and causing the first membrane to move from its open position to its closed position.

4. An autonomous irrigation device (10; 100) according to claim 3, wherein the adjusting device (56) of the opening actuator (56) and the adjuster (68) of the closing actuator (58) are accessible from the outside of a body (18) of the autonomous irrigation device (10; 100).

5. An autonomous irrigation device (10; 100) according to one of claims 3 and 4, considered in combination with claim 2, wherein the opening head (57) and the closing head (59) are screwed onto the piston (60), wherein the adjuster (66) of the opening actuator (56) is configured to screw or unscrew the opening head in relation to the piston, such as to set a distance (H2) between one end (62) of the opening head and the piston, and wherein the adjuster (68) of the closing actuator (58) is configured to screw or unscrew the closing head from the piston, so as to set a distance (H4) between one end (64) of the closing head and the piston.

6. An autonomous irrigation device (10; 100) according to one of the preceding claims, wherein the tilting element (54) is bistable.

7. An autonomous irrigation device (10; 100) according to claim 6, wherein the tilting element (54) is a bistable blade, wherein a first head among the opening head (57) and the closing head (59) is configured to pull on the bistable blade so as to cause the valve (12) to tilt between its open and closed configurations, and wherein a second head among the opening head and the closing head is configured to push on the bistable blade so as to cause the valve to switch between its closed and open configurations.

8. An autonomous irrigation device (10; 100) according to one of the preceding claims, wherein the valve (12) comprises a branch circuit (38; 112), which connects the control chamber (28) to the water outlet duct (22), wherein, when the circulation of water (C2) through the branch circuit is permitted, then the valve is in an open configuration, wherein, when the circulation of water (C2) through the branch circuit is interrupted, then the valve is in a closed configuration, and wherein the tilting element (54) is configured to selectively allow or interrupt the circulation of water (C2) through the branch circuit.

9. An autonomous irrigation device (10; 100) according to claim 8, wherein the regulator (14) comprises a second membrane (50), placed in the branch circuit (38; 112), movable between an opening position, wherein the second membrane does not prevent the circulation of water (C2) through the branch circuit, and a closed position, wherein the second membrane prevents the circulation of water through the branch circuit, and wherein the tilting of the tilting element (54) causes the second membrane (50) to move between its open and closed positions.

10. An autonomous irrigation device (10; 100) according to claim 9, wherein the regulator (14) comprises a pusher (52), mounted between the tilting element (54) and the second membrane (50), and attached on the one hand to the tilting element and on the other to the second membrane.
